# EUROPÄISCHE PATENTANMELDUNG

(11) **EP 4 186 368 A1**
(43) Veröffentlichungstag der Anmeldung: **31.05.2023**
(21) Anmeldenummer: 21210829.4
(22) Anmeldetag: 26.11.2021
(51) Int. Cl.: A21C 5/00, A21C 9/08, A21C 15/00, A23G 3/28

(54) **FÜLLMASCHINE MIT ROBOTERARM**

(71) Anmelder: Albert Handtmann Maschinenfabrik GmbH & Co. KG, 88400 Biberach (DE)
(72) Erfinder: Staudenrausch, Martin, 88400 Biberach (DE)
(74) Vertreter: Grünecker Patent- und Rechtsanwälte PartG mbB

(57) **Zusammenfassung**

Die Erfindung betrifft eine Füllmaschine 1 zum Ausstoßen eines Nahrungsmittels 20 mit einem Fülltrichter 2, einem Förderwerk 3 über das das Nahrungsmittel zu einer Fülleinrichtung 5 gefördert und ausgestoßen werden kann, sowie einer Füllmaschinensteuerung 6, wobei die Füllmaschine 1 mindestens einen Roboterarm 4 aufweist.

## Beschreibung

Die Erfindung betrifft eine Füllmaschine nach dem Oberbegriff des Anspruchs 1 sowie die Verwendung einer solchen Füllmaschine zum Verzieren von Nahrungsmitteln, zum Befüllen von Behältnissen oder zum Belegen von Blechen.

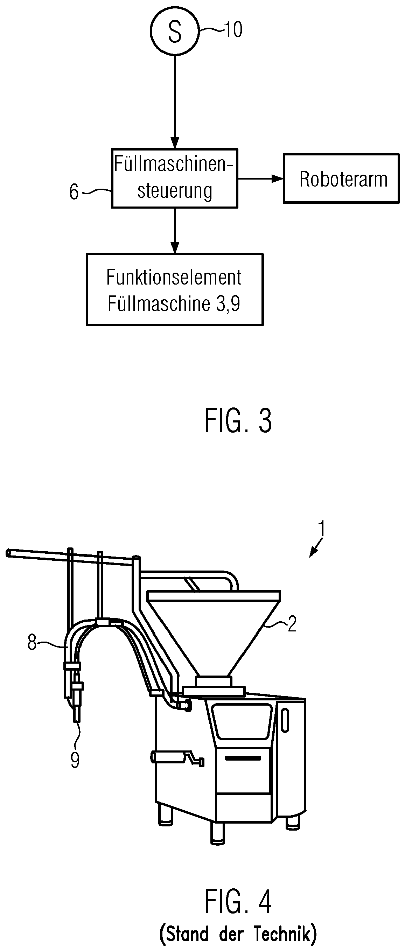

Füllmaschinen werden unter anderem zum Verzieren von Nahrungsmitteln, z.B. Kuchen, verwendet. Figur 4 zeigt eine entsprechende Füllmaschine gemäß dem Stand der Technik. Eine solche Füllmaschine weist einen Fülltrichter 2 auf, in den ein Nahrungsmittel, das z.B. zum Verzieren verwendet werden soll, gefüllt werden kann. Dieses Nahrungsmittel wird mittels einem Förderwerk, z.B. einer Flügelzellenpumpe in einen Schlauch 8 gepumpt und kann beispielsweise über ein von Hand geführtes Dosierventil auf ein anderes Nahrungsmittel, z.B. einen Kuchen aufgebracht werden.

Dabei ergibt sich das Problem, dass das gleichmäßige und optisch ansprechende Ergebnis überwiegend von der Fertigkeit des Bedieners abhängt. Außerdem kann diese Produktionsweise nur sehr langsam erfolgen. Sie ist sehr personalintensiv und insbesondere nicht für die Massenproduktion geeignet.

Eine Füllmaschine kann auch verwendet werden, um Behältnisse, wie z.B. Gläser, Dosen, Becher oder Schalen zu befüllen. Hier ergibt sich das gleiche Problem, nämlich eine personalintensive und langsame Produktionsweise.

Insbesondere kann nicht sichergestellt werden, dass die Düse und das zu verzierende oder zu befüllende Objekt korrekt zueinander positioniert sind. Auch die Verwendung von separaten Handhabungsgeräten hat sich als problematisch erwiesen, da sich auch hier eine schlechte Wiederholgenauigkeit ergibt, insbesondere dadurch, dass keine gleichbleibende Ausrichtung, bzw. Abstand zwischen Handhabungsgerät und Füllmaschine und dem zu verzierenden Nahrungsmittel, bzw. dem zu füllenden Behältnis sichergestellt ist. Auch das Abstimmen verschiedener Funktionen zwischen den Geräten ist problematisch.

Hiervon ausgehend liegt der vorliegenden Erfindung die Aufgabe zugrunde, eine verbesserte Füllmaschine bereitzustellen, die ein einfaches, schnelles und wiederholgenaues Ausstoßen von Nahrungsmittel in oder auf ein weiteres Objekt, z.B. ein weiteres Nahrungsmittel oder ein Behältnis, ermöglicht.

Erfindungsgemäß wird diese Aufgabe durch den Gegenstand des Anspruchs 1 gelöst.

Gemäß der vorliegenden Erfindung weist die Füllmaschine mindestens einen Roboterarm auf. Das heißt, dass der Roboter in die Füllmaschine integriert und Teil der Füllmaschine ist. Die Position, an der der Roboterarm angebaut ist, ist stets die Gleiche. Dadurch ergibt sich z.B. der Vorteil, dass die Fülleinrichtung und ein Objekt, das verziert werden soll, z.B. ein Kuchen oder ein Behältnis, das befüllt werden soll, stets wiederholgenau korrekt zueinander ausgerichtet werden können. Dadurch, dass die Füllmaschine mindestens einen Roboterarm aufweist kann auch wesentlich Platz gespart werden. Die Füllmaschine kann auch, z.B. im Produktionsraum über Rollen verschoben werden, was keinerlei Einfluss auf die folgende Produktion hat - da die Position der Basis des Roboterarms an der Füllmaschine konstant ist. Darüber hinaus kann die Produktionsgeschwindigkeit im Vergleich zum Stand der Technik wesentlich erhöht werden.

Unter Fülleinrichtung versteht man hier eine Einrichtung, die sich an den Auslauf des Förderwerks anschließt und über die das Nahrungsmittel ausgestoßen werden kann.

Die Maschine kann nur einen Roboterarm aufweisen, aber auch zwei oder mehr Roboterarme, die auch kooperierend arbeiten können. Dann sind Schutzeinrichtungen vorteilhaft, aufgrund der möglichen hohen Bewegungsgeschwindigkeiten der Roboterarme.

Es ist besonders vorteilhaft, wenn der Roboterarm von der Füllmaschinensteuerung angesteuert wird. Das bedeutet, dass die Robotersteuerung in die Füllmaschinensteuerung integriert sein kann. Das bedeutet, dass die Bahnsteuerung des oder der Roboterarme über die Füllmaschinensteuerung erfolgen kann. Unter Bahnsteuerung versteht man z.B. die Steuerung der Bewegungsbahn des Werkzeuges am Ende des jeweiligen Roboterarms, z.B. eines Greifers oder eines Auslasses für Nahrungsmittel oder insbesondere einer Fülldüse und deren Geschwindigkeit, insbesondere Geschwindigkeitsprofil entlang der Bewegungsbahn. Somit kann die Bewegung des Roboterarms auch an weitere Füllparameter der Füllmaschine angepasst werden.

Die Fülleinrichtung weist einen Auslass auf, über den das Nahrungsmittel ausgestoßen werden kann. Der Auslass kann entweder feststehend sein oder mit dem Roboterarm bewegt werden. Wenn der Auslass mit dem Roboterarm bewegt wird, können beispielsweise Muster, Verzierungen etc. auf ein Nahrungsmittel aufgebracht werden. Der Auslass kann auch mit dem Roboterarm hin zu einem zu füllenden Behälter verfahren werden. Auch ist es möglich, dass der Roboterarm den Auslass derart verfährt, dass mehrere Portionen, beispielsweise auf einem Blech, aufgebracht werden können.

Wenn der Auslass feststehend ist, kann der Roboterarm das zu verzierende oder zu füllende Objekt entsprechend darunter bewegen.

Vorteilhafterweise umfasst die Fülleinrichtung einen Schlauch, der entweder als Auslass ein offenes Schlauchende, z.B. mit Düse aufweist oder ein Dosierventil.

Ein flexibler Schlauch ist vor allem vorteilhaft, wenn ein Nahrungsmittel, z.B. ein Kuchen, verziert werden soll, oder Behältnisse zum Befüllen an unterschiedlichen Positionen angeordnet sind, derart, dass der Auslass zum jeweiligen Behältnis verfahren werden kann. Ein flexibler Schlauch lässt entsprechende Bewegungen zu.

Dabei ist an den Roboterarm entweder der Schlauch montiert und/oder vorteilhafterweise am Dosierventil, derart, dass der Auslass, insbesondere das Dosierventil gut geführt werden kann.

Somit ist der Füllmaschinensteuerung immer die korrekte Position des Auslasses bzw. des Dosierventils bekannt.

Vorteilhafterweise weist die Füllmaschine eine Sensoreinrichtung auf, die die Position eines Objekts, auf oder in das das ausgestoßene Nahrungsmittel ausgestoßen werden soll, bestimmt. Dabei kann z.B. die Position eines zu verzierenden Objekts, z.B. eines Kuchens bestimmt werden, derart, dass z.B. eine Verzierung, wie eine Schrift etc., korrekt auf das zu verzierende Nahrungsmittel aufgebracht werden kann. Alternativ kann auch eine Position einer zu belegenden Fläche, z.B. eines Blechs, bestimmt werden. Somit kann das Blech in korrekter Weise mit mehreren ausgestoßenen Portionen belegt werden, z.B. mit Plätzchen, etc. Weiter kann auch die Position eines zu befüllenden Behältnisses bestimmt werden.

Vorteilhafterweise kann der mindestens eine Roboterarm mit seiner Basis an der Füllmaschine, insbesondere am Füllmaschinengehäuse befestigt sein. Der Roboterarm kann aus starren Gliedern bestehen, die miteinander z.B. durch Dreh- oder Schubgelenke verbunden sind, wobei die Gelenke durch gesteuerte Antriebe verstellt werden können. Ein Ende dieser "Gliederkette" ist die Basis, während das andere Ende frei beweglich ist und entweder mit einem Werkzeug, z.B. Greifer bestückt sein kann oder aber eben beispielsweise mit dem Schlauch und/oder dem Dosierventil verbunden sein kann, um den Auslass zu bewegen.

Dadurch, dass der Roboterarm Teil der Füllmaschine ist, kann im Produktionsraum auch Platz gespart werden, da kein extra Roboter aufgestellt werden muss.

Vorteilhafterweise ist der mindestens eine Roboterarm ein Manipulator eines Cobots, dessen Robotersteuerung in die Füllmaschinensteuerung integriert ist. Ein Cobot ist ein Industrieroboter, der mit Menschen gemeinsam arbeiten kann, wobei der Produktionsprozess nicht durch Schutzeinrichtungen von diesen getrennt werden muss. Dabei können sich die Roboterarme entweder nur sehr langsam bewegen, derart, dass keine Gefahr für den Bediener entsteht oder es kann eine kollisionsüberwachende Sensorik vorgesehen werden.

Vorteilhafterweise können die Funktionen des mindestens einen Roboterarms an Funktionen der Füllmaschine bzw. Füllparameter automatisch über die Füllmaschinensteuerung angepasst werden. Insbesondere kann die Bewegungsbahn und/oder Geschwindigkeit der Bewegung des jeweiligen Roboterarms, insbesondere des Werkzeugs oder des Auslasses an die von der Fülleinrichtung ausgestoßene Nahrungsmittelmenge pro Zeit, d.h. z.B. den Volumenstrom angepasst werden. Wird beispielsweise der ausgestoßene Volumenstrom erhöht indem beispielsweise das Förderwerk und/oder das Dosierventil einen höheren Volumenstrom am Auslass erzeugen, so wird auch die Geschwindigkeit der Bewegung des Roboterarms entsprechend erhöht werden.

Es ist besonders vorteilhaft, wenn die Funktion des Roboterarms, insbesondere die Bahnsteuerung, mit Funktionen der Füllmaschine synchronisiert werden kann.

Es ist auch möglich, dass Funktionen der Füllmaschine an die Funktionen des Roboterarms angepasst werden können, insbesondere die von der Fülleinrichtung ausgestoßene Nahrungsmittelmenge pro Zeit an die Bewegungsbahn und/oder Geschwindigkeit der Bewegung des jeweiligen Roboterarms angepasst werden kann. Dies ist z.B. dann von Bedeutung, wenn beim Verzieren z. B. Umkehrpunkte in der Bewegungsbahn zu überwinden sind.

Vorteilhafterweise ist der Roboter mit ein bis sechs Achsen ausgestattet. Vorteilhafterweise weist der Roboterarm 5 Achsen auf.

Es ist vorteilhaft, wenn das Objekt, in oder auf das das Lebensmittel ausgestoßen werden soll, mittels einer Transporteinrichtung zu einer Bearbeitungsstation der Füllmaschine transportiert werden kann und die Position des Objekts entweder über eine Sensoreinrichtung erfasst wird und/oder die Lage von der Füllmaschinensteuerung berechnet wird. Somit ist sichergestellt, dass das Objekt in einer korrekten Position ist, wenn es verziert oder befüllt wird.

Die Erfindung betrifft auch eine Verwendung einer Füllmaschine nach mindestens einem der Ansprüche 1-12 zum Verzieren von Nahrungsmitteln, zum Befüllen von Behältnissen oder zum Belegen von Blechen. Dabei ist es auch möglich, dass mit nur einer Füllmaschine alle drei zuvor genannten Verwendungen realisiert werden können. Dazu müssen in die Füllmaschine lediglich die entsprechenden Füllparameter und Roboterprogramme eingegeben werden.

Das in der Füllmaschine ausgestoßene Lebensmittel kann ein pastöses Lebensmittel sein, wie beispielsweise Teig, Zuckerguss, Schokolade, Brät, Milchprodukte wie Frischkäse, Wurstmasse, etc.

Eine Verwendung einer Füllmaschine nach mindestens einem der Ansprüche 1-14 kann auch zusätzlich oder alternativ darin liegen, dass der mindestens eine Roboterarm Behältnisse aufnimmt und in den Fülltrichter entleert. Dies ist insbesondere vorteilhaft bei Füllmaschinen, die nicht mit einer Armhebevorrichtung für die Beschickung des Fülltrichters, z.B. mit Brätwagen, ausgerüstet sind. Dabei kann für diese Funktion ein extra Roboterarm vorgesehen sein, oder aber der Roboterarm, der auch zum Füllen, bzw. Verzieren entsprechend Anspruch 13 verwendet wird, kann vor dem Befüllen oder Verzieren verwendet werden, um das Nahrungsmittel in den Fülltrichter zu füllen. Dazu wird ein gesondertes Roboterprogramm verwendet und es kann entsprechendes Werkzeug wie etwa ein Greifwerkzeug, das insbesondere auswechselbares ist, vorgesehen sein, wobei gemäß einer bevorzugten Ausführungsform der Wechsel des Greifwerkzeugs automatisch erfolgen kann.

Nachfolgend wir die Erfindung unter Bezugnahme folgender Figuren näher erläutert.
Figur 1 zeigt grob schematisch eine Seitenansicht eines ersten Ausführungsbeispiels einer Füllmaschine gemäß der vorliegenden Erfindung.
Figur 2 zeigt grob schematisch eine Seitenansicht eines zweiten Ausführungsbeispiels einer Füllmaschine gemäß der vorliegenden Erfindung.
Figur 3 zeigt grob schematisch ein Blockschaltbild der Steuerung gemäß der vorliegenden Erfindung.
Figur 4 zeigt grob schematisch eine Füllmaschine nach dem Stand der Technik.

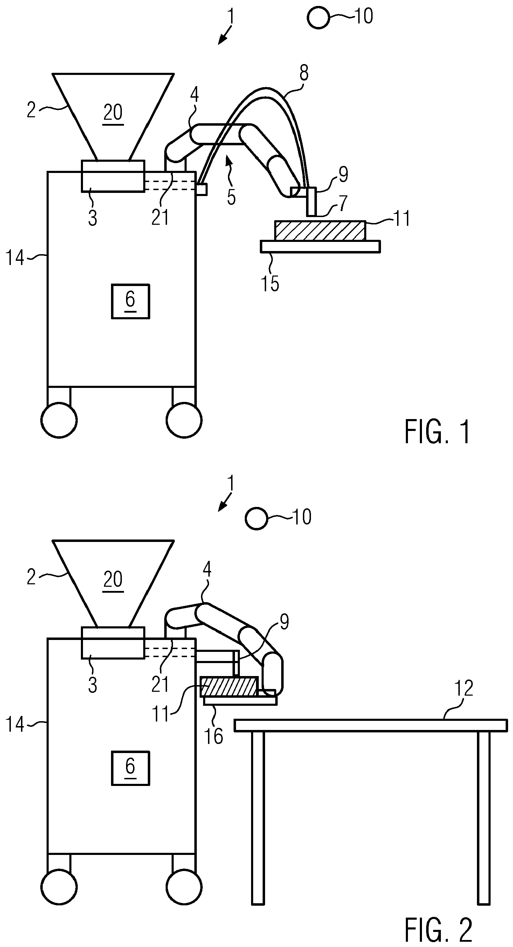

Figur 1 zeigt grob schematisch ein erstes Ausführungsbeispiel gemäß der vorliegenden Erfindung. Die Füllmaschine 1 zum Ausstoßen eines Nahrungsmittels 20 weist einen Fülltrichter 2 auf. In diesem Fülltrichter 2 befindet sich ein Nahrungsmittel 20, insbesondere pastöse Nahrungsmittel, wie beispielsweise Teig, Zuckerguss, Schokolade, Brät, Milchprodukte. In bekannter Weise befindet sich unterhalb des Fülltrichters ein Förderwerk 3, z.B. in Form einer Flügelzellenpumpe, über das das Nahrungsmittel 20 zu einer Fülleinrichtung 5 gefördert und schließlich ausgestoßen werden kann. Die Fülleinrichtung 5 schließt sich an den Ausgang des Förderwerks 3 an und umfasst hier beispielsweise einen flexiblen Schlauch 8 und ein am Ende des Schlauchs 8 angeordnetes Dosierventil 9, über das das Nahrungsmittel 20 dosiert ausgestoßen werden kann. Das Dosierventil 9 kann z.B. elektronisch oder pneumatisch angesteuert werden. Das Dosierventil ist derart ausgebildet, dass es zumindest den Auslass 7 der Fülleinrichtung schließen und öffnen kann. Die ausgestoßene Menge pro Zeit, d.h. der Volumenstrom wird über die Steuerung durch das Förderwerk bestimmt. Aber auch ein offenes Schlauchende ist möglich. Die Fülleinrichtung 5 weist einen Auslass 7 auf, über den das Nahrungsmittel 20 ausgestoßen werden kann. Die Füllmaschine 1 weist ein Außengehäuse 14 aus Blech auf und beispielsweise Rollen, derart, dass die Füllmaschine im Produktionsraum beweglich ist. Weiter weist die Füllmaschine 1 mindestens einen Roboterarm 4 auf. Der Roboterarm 4 ist in der Füllmaschine integriert, also Teil der Füllmaschine.

Der jeweilige Roboterarm 4 kann ein multifunktionaler Handhabungsautomat sein, der aus einer Reihe von starren Gliedern bestehen kann, die miteinander durch Dreh- oder Schubgelenke verbunden sind, wobei die Gelenke durch gesteuerte Antriebe (nicht dargestellt) verstellt werden können. Ein Ende dieser "Gliederkette" ist die Basis 21, die fest an der Füllmaschine montiert ist, derart, dass sie immer die gleiche Position an der Füllmaschine einnimmt. Die Basis 21 kann beispielsweise am Gehäuse 14 montiert sein oder aber an einem Rahmen im Maschinengestell und durch das Gehäuse 14 hindurchragen. Das andere Ende des Roboterarms ist frei beweglich und kann ein Werkzeug aufweisen oder, wie in Figur 1 gezeigt ist, mit dem Schlauch 8, bzw. mit dem Dosierventil 9 verbunden sein, um den Auslass 7 des Dosierventils 9 korrekt zu positionieren, z.B. entlang einer bestimmten Bahn mit einer entsprechenden Geschwindigkeit zu führen, derart, dass z.B. ein Schriftzug auf ein zu verzierendes Objekt 11 aufgebracht werden kann. Der mindestens eine Roboterarm 4 kann mit 1-6 Achsen ausgestattet sein.

Vorzugsweise erstreckt sich der Roboterarm von der Oberseite des Maschinengehäuses 14 aus, wie in den Figuren erkannt werden kann.

Das Objekt 11 kann wie in Fig. 1 dargestellt ist, beispielsweise mittels eines Bandes 15 antransportiert werden oder aber auf einem Tisch (Fig.2) liegen, etc.

Alternativ kann, wenn auch nicht dargestellt, über das Dosierventil 9 ein Behältnis befüllt werden. Die Düse 9 kann dann mittels Roboterarm 4 über dem Behältnis platziert werden, eine vorbestimmte Menge in das Behältnis einfüllen und wieder zum nächsten Behältnis geführt werden. Die Füllhöhe im Behältnis kann sensorisch erfasst werden. Ebenfalls ist es möglich, dass beispielsweise das Dosierventil 9 über ein nicht dargestelltes Blech bewegt wird und portionsweise Nahrungsmittel 20 auf dem Blech ausstößt.

Die Füllmaschine 1 weist weiter eine Füllmaschinensteuerung 6 auf. Der Roboterarm 4 wird ebenfalls von der Füllmaschinensteuerung 6 angesteuert.

Die Füllmaschine 1 weist weiter vorteilhafterweise eine Sensoreinrichtung 10 auf, die die Position eines Objekts, auf oder in das das Nahrungsmittel ausgestoßen werden soll, bestimmen kann, z.B. die Position des zu verzierenden Nahrungsmittels 11, die Position einer zu belegenden Fläche, insbesondere eines Blechs und/oder die Position eines zu befüllenden Behältnisses. Eine solche Sensoreinrichtung kann beispielsweise wie folgt ausgebildet sein: ein Kamerasystem, eine berührungsfreie (z.B. optische) oder mechanische Abtastung an einer Zuführeinrichtung, Abtastung eines zu belegenden Blechs mittels Näherungsschalter etc.

Figur 2 zeigt eine weitere Ausführungsform der vorliegenden Erfindung, die im Wesentlichen der in Figur 1 gezeigten Ausführungsform entspricht, wobei jedoch hier das Dosierventil 9 festmontiert ist und das Objekt 11 auf oder in das das ausgestoßene Nahrungsmittel ausgestoßen werden soll, relativ zum Auslass 7, z.B. des Dosierventils 9 bewegbar ist. Dazu kann der Roboterarm 4 ein entsprechendes Werkzeug 16, z.B. eine Halterung aufweisen, hier beispielsweise eine Halterung 16, die das Objekt 11, z.B. den Kuchen trägt und es unter der Düse bewegen kann. Dazu kann das Objekt 11 z.B. ebenfalls, wie hier dargestellt ist, von einem Tisch aufgenommen werden oder aber von einem Förderband (in Fig. 2 nicht dargestellt) etc.

Es ist auch möglich, dass beide in Figur 1 und 2 gezeigten Varianten so kombiniert werden, dass sowohl der Auslass 7, z.B. am Dosierventil 9 über einen ersten Roboterarm 4 als auch das Objekt 11 über einen weiteren Roboterarm 4 und einer entsprechenden Halterung 16 relativ zueinander bewegt werden.

Gemäß der Erfindung werden, wie in der Figur 3 dargestellt ist, die Funktionselemente der Füllmaschine von der Füllmaschinensteuerung 6 angesteuert. Die Füllmaschinensteuerung 6 steuert hierbei z.B. das Förderwerk 3 an und das Dosierventil 9. Das heißt über das Dosierventil und/oder das Förderwerk kann der ausgestoßene Volumenstrom eingestellt werden. Ebenso kann z.B. das Dosierventil 9 ganz geschlossen werden. Aber auch weitere Funktionselemente, wie beispielsweise das Transportband können über die Füllmaschinensteuerung angesteuert werden. Der Roboterarm 4 wird ebenfalls von der Füllmaschinensteuerung 6 angesteuert. Das heißt, die Antriebe, die die Gelenke des Roboterarms bewegen, werden von der Füllmaschinensteuerung, die ein entsprechendes Programm aufweist, angesteuert. Auch der optionale Sensor 10, der die Position des Objekts 11 bestimmt, sendet seine Messsignale an die Steuerung 6. Das bedeutet, dass die Funktion des Roboterarms 4 an die Funktion der Füllmaschine anpassbar ist. Der Roboterarm, d.h. hier insbesondere der Auslass 7 des Dosierventils 9, kann dabei entlang einer bestimmten Bewegungsbahn bewegt werden und die Geschwindigkeit der Bewegung des Roboterarms, bzw. ein Geschwindigkeitsprofil kann entsprechend angepasst werden.

Dadurch, dass dieselbe Steuerung 6 sowohl die weiteren Funktionselemente der Füllmaschine ansteuert als auch den Roboterarm 4, insbesondere dessen Antriebe, können die Funktion des Roboterarms und die weiteren Funktionen der Füllmaschine in idealer Weise aufeinander abgestimmt werden. Die Füllmaschinensteuerung 6 kann dabei auch mehrere Roboterarme ansteuern.

Der oder die Roboterarme 4 sind vorzugsweise als kollaborierende Roboter (Cobots) ausgebildet. Hierbei sind keine zusätzlichen Schutzeinrichtungen erforderlich, da sich die Roboterarme nur sehr langsam bewegen. Es ist aber auch möglich, eine nicht dargestellte, kollisionsüberwachende Sensorik vorzusehen, deren Signale ebenfalls von der Steuerung 6 der Füllmaschine verarbeitet und ausgewertet werden.

Die Bewegungsbahn und/oder die Geschwindigkeit der Bewegung des Roboterarms kann dabei beispielsweise an die über den Auslass 7 von der Fülleinrichtung 5 ausgestoßenen Menge pro Zeit oder eines dazu proportionalen Werts angepasst werden. Wird beispielsweise über den Auslass 7 des Dosierventils 9 eine größere Nahrungsmittelmenge pro Zeit ausgestoßen, kann sich der Roboterarm 4 auch schneller bewegen. Umgekehrt kann auch der ausgestoßene Volumenstrom an den Bewegungsablauf des Roboterarms angepasst werden.

Es gibt verschiedene Verwendungen, bzw. Produktionsarten für die erfindungsgemäße Füllmaschine:

### Produktionsart "Verzieren"

### Produktionsart "Verzieren" Funktionsweise 1

Das Objekt 11, hier das zu verzierende Nahrungsmittel, z.B. ein Kuchen kann auf einen Tisch 12 gestellt werden oder mittels eines Bandes 15, wie in Figur 1 gezeigt ist, zur Bearbeitungsstation gefördert werden. Der Sensor 10 erkennt die Lage des Objekts 11 und leitet dieses Signal an die Steuerung 6. Die Füllmaschine fördert mittels Förderwerk 3 das aufzubringende Nahrungsmittel 20 in die Fülleinrichtung 5, d.h. hier durch den Schlauch 8 bis zum Dosierventil 9. Die Steuerung 6 kennt jetzt die Lage des Objekts 11 und bringt über den Roboterarm 4 den Auslass 7 des Dosierventils 9 in eine korrekte Position und bewegt das Dosierventil derart, dass das Nahrungsmittel 20 mit einer entsprechenden Form auf das Objekt 11 aufgebracht werden kann, z.B. ein Schriftzug etc. Dabei ist die Bewegungsbahn und die Geschwindigkeit, mit der das Dosierventil 9 über den Roboterarm bewegt wird, an die weiteren Funktionen der Füllmaschine 1, wie z.B. ausgestoßene Menge pro Zeit angepasst, derart, dass die gewünschte Verzierung hergestellt werden kann. Die Produktionsart "Verzieren" kann auch im Durchlauf erfolgen, d. h. das zu verzierende Objekt wird mit einer definierten Geschwindigkeit, die von der Steuerung 6 bestimmt wird oder dieser bekannt ist, durch den Beladebereich hindurchgeführt und gleichzeitig das Nahrungsmittel zum Verzieren aufgebracht.

### Produktionsart "Verzieren", Funktionsweise 2

Alternativ kann die Füllmaschine 1 das zu verzierende Objekt 11, wie in Figur 2 dargestellt ist, unter einen feststehenden Auslass 7, bzw. einem Dosierventil 9 mit Auslass 7, das fest mit der Füllmaschine 1 verbunden ist, führen und durch entsprechende Bewegung des Objekts 11 unter dem Dosierventil 9, bzw. Auslass 7 die entsprechende Form auf dem Objekt 11 erzeugen oder aufbringen. Beispiel hierfür ist z.B. auch das Bewegen eines Kuchens unter dem Dosierventil 9, der auf einer Halterung 16 aufliegen kann. Das Objekt 11 kann dabei ebenfalls von einem Tisch 12 oder einem Band 15 aufgenommen und dort wieder abgelegt werden.

Bei dieser Ausführungsform kann auch eine Sensoreinrichtung 10 vorgesehen sein. Diese ist allerdings optional, da sowohl die Position des feststehenden Auslasses 7 und die Position der Halterung 6 für das Objekt 11 der Füllmaschinensteuerung 6 bekannt sind.

Eine Kombination der Funktionsweisen 1 und 2 (in Form von kooperierenden Roboterarmen) ist ebenfalls möglich.

### Produktionsart "Behältnis befüllen"

### Produktionsart "Behältnis befüllen" Funktionsweise 1

Die zu befüllenden Behältnisse, stehen beispielsweise auf einem Tisch, wobei die Füllmaschine über eine Sensoreinrichtung 10 die Lage der zu befüllenden Behältnisse sensorisch erkennt. Auch kann der Füllstand über einen entsprechenden Sensor ermittelt werden. Die Behältnisse können dann, wie in Figur 1 dargestellt ist, über ein am Roboterarm 4 befestigtes Dosierventil 9 befüllt werden oder aber auch über ein offenes Schlauchende mit Auslass 7, das ebenfalls mit dem Roboterarm verbunden ist.

### Produktionsart "Behältnis befüllen" Funktionsweise 2

Die zu befüllenden Behältnisse stehen beispielsweise auf einem Tisch 12 oder Band 15, wobei die Sensoreinrichtung 10 die Lage der jeweiligen Behältnisse sensorisch erkennt und an die Steuerung 6 weiterleitet. Über eine Halterung, bzw. einen Greifer, kann ein entsprechender Behälter über den Roboterarm 4 aufgenommen werden und unter einen feststehenden Auslass 7 oder ein Dosierventil 9 geführt werden, wonach das Behältnis mit der entsprechenden Masse befüllt wird. Dabei kann das Behältnis zur optimalen Befüllung während dem Füllvorgang horizontal und/oder vertikal bewegt werden. Zur Erhöhung der Taktzahl kann ein zweiter Roboterarm 4 an der Füllmaschine 1 befestigt sein (nicht dargestellt), der während des Befüllvorgangs des ersten Roboterarms ein weiteres leeres Behältnis sucht, aufnimmt und in eine füllnahe Position bringt.

Eine Kombination der Funktionsweisen 1 und 2 (in Form von kooperierenden Roboterarmen) ist ebenfalls möglich.

### Produktionsart "Bleche belegen"

### Produktionsart "Bleche belegen" Funktionsweise 1

Der Roboterarm 4 nimmt ein Blech, beispielsweise ein Backblech, auf und führt dies unter einen feststehenden Auslass 7 oder unter ein Dosierventil 9 mit einem Auslass 7 (siehe Figur 2). Durch Bewegen des Blechs und gleichzeitiges Ausstoßen des Nahrungsmittels können so Formen auf das Blech, auf ein darauf befindliches Backpapier oder auf eine bereits darauf befindliche Lage von Nahrungsmitteln aufgebracht werden.

### Produktionsart "Bleche belegen" Funktionsweise 2

Das Blech befindet sich auf einem Tisch 12 oder auf einer entsprechenden Halterung oder z.B. auf einem Förderband 15. Die Füllmaschine 1 erkennt mittels Sensoreinrichtung 10 die Lage des Blechs oder die Lage der bereits darauf befindlichen zu belegenden Nahrungsmittel und bringt mittels eines Dosierventils 9 oder eines offenen Schlauchendes, wie in Figur 1 gezeigt ist, das Nahrungsmittel mit der gewünschten Form auf das Objekt 11, bzw. das Backblech oder das zu verzierende Nahrungsmittel auf.

Als weitere Anwendung kann der Roboterarm 4 oder ein weiterer Roboterarm 4 auch ein Werkzeug, z.B. einen Greifer aufweisen, über das ein Behälter, z.B. Eimer, Kiste, etc., aufgenommen werden kann und in den Fülltrichter 2 entleert werden kann. Somit dient der Roboterarm 4 auch dazu, das Nahrungsmittel 20 in den Trichter 2 einzufüllen. Dazu ist ein entsprechendes Programm zum Anheben und Ausleeren eines Behälters in der Füllmaschinensteuerung 6 gespeichert.

## Patentansprüche

1. Füllmaschine (1) zum Ausstoßen eines Nahrungsmittels (20) mit einem Fülltrichter (2), einem Förderwerk (3) über das das Nahrungsmittel zu einer Fülleinrichtung (5) gefördert und ausgestoßen werden kann, sowie einer Füllmaschinensteuerung (6),
**dadurch gekennzeichnet, dass**
die Füllmaschine (1) mindestens einen Roboterarm (4) aufweist.

2. Füllmaschine (1) nach Anspruch 1, **dadurch gekennzeichnet, dass** der Roboterarm (4) von der Füllmaschinensteuerung (6) angesteuert wird.

3. Füllmaschine (1) nach Anspruch 1 oder 2, **dadurch gekennzeichnet, dass** die Fülleinrichtung (5) einen Auslass (7) aufweist, der feststehend ist oder über den Roboterarm (4) bewegt werden kann.

4. Füllmaschine (1) nach Anspruch 3, **dadurch gekennzeichnet, dass** die Fülleinrichtung (5) einen Schlauch (8) aufweist, der entweder als Auslass (7) ein offenes Schlauchende aufweist oder ein Dosierventil (9), wobei der Auslass (7) über den Roboterarm (4) bewegt werden kann.

5. Füllmaschine (1) nach Anspruch 4, **dadurch gekennzeichnet, dass** der Schlauch (8) und/oder das Dosierventil (9) an den Roboterarm (4) montiert ist.

6. Füllmaschine (1) nach Anspruch 3, **dadurch gekennzeichnet, dass** der Roboterarm (4) ein Objekt (11), auf oder in das das ausgestoßene Nahrungsmittel ausgestoßen werden soll, relativ zu dem Auslass (7), insbesondere unter den feststehenden Auslass (7) bewegen kann.

7. Füllmaschine (1) nach mindestens einem der vorhergehenden Ansprüche, **dadurch gekennzeichnet, dass** die Füllmaschine eine Sensoreinrichtung (10) aufweist, die die Position eines Objekts (11), auf oder in das das ausgestoßene Nahrungsmittel ausgestoßen werden soll, bestimmt, insbesondere
- die Position eines zu verzierenden Nahrungsmittels (11),
- die Position einer zu belegenden Fläche (11), insbesondere eines Blechs, und /oder
- die Position eines zu befüllen Behältnisses (11).

8. Füllmaschine (1) nach mindestens einen der Ansprüche 1-7, **dadurch gekennzeichnet, dass** der mindestens eine Roboterarm (4) mit seiner Basis (21) an der Füllmaschine, insbesondere am Füllmaschinengehäuse oder am Maschinenrahmen befestigt ist.

9. Füllmaschine (1) nach mindestens einem der Ansprüche 1-8, **dadurch gekennzeichnet, dass** der mindestens eine Roboterarm (4) ein Manipulator eines Cobots ist, dessen Robotersteuerung in die Füllmaschinensteuerung (6) integriert ist.

10. Füllmaschine nach mindestens einem der vorhergehenden Ansprüche, **dadurch gekennzeichnet, dass** Funktionen des mindestens einen Roboterarms (4) an weitere Funktionen der Füllmaschine automatisch über die Füllmaschinensteuerung (6) angepasst werden können, insbesondere die Bewegungsbahn und/oder Geschwindigkeit der Bewegung des jeweiligen Roboterarms an die von der Fülleinrichtung (5) ausgestoßene Nahrungsmittelmenge pro Zeit angepasst werden kann.

11. Füllmaschine nach mindestens einem der vorhergehenden Ansprüche, **dadurch gekennzeichnet, dass** Funktionen der Füllmaschine (1) an die Funktionen des Roboterarms (4) angepasst werden können, insbesondere die von der Fülleinrichtung (5) ausgestoßene Nahrungsmittelmenge pro Zeit an die Bewegungsbahn und/oder Geschwindigkeit der Bewegung des jeweiligen Roboterarms (4) angepasst werden kann.

12. Füllmaschine nach mindestens einem der Ansprüche 1-11, **dadurch gekennzeichnet, dass** der mindestens eine Roboterarm (4) mit 1-6 Achsen ausgestattet ist.

13. Füllmaschine nach mindestens einem der Ansprüche 1-12, **dadurch gekennzeichnet, dass** das Objekt (11), in oder auf das das Lebensmittel ausgestoßen werden soll, mittels einer Transporteinrichtung (15) zu einer Bearbeitungsstation transportiert wird und die Position des Objekts entweder über eine Sensoreinrichtung (10) erfasst wird und/oder die Lage und / oder Geschwindigkeit des Objekts von der Füllmaschinensteuerung berechnet wird.

14. Verwendung einer Füllmaschine nach mindestens einem der Ansprüche 1-13 zum Verzieren von Nahrungsmitteln, zum Befüllen von Behältnissen oder zum Belegen von Blechen.

15. Verwendung einer Füllmaschine nach Anspruch 14, **dadurch gekennzeichnet, dass** als von der Füllmaschine ausgestoßene Lebensmittel ein pastöses Lebensmittel verwendet wird, insbesondere aus folgender Gruppe:
Teig, Zuckerguss, Schokolade, Brät, Milchprodukte, Wurstprodukte.

16. Verwendung einer Füllmaschine nach mindestens einem der Ansprüche 1-15, **dadurch gekennzeichnet, dass** mindestens ein Roboterarm (14) Behältnisse aufnimmt und in den Fülltrichter (2) entleert.
